# EUROPEAN PATENT SPECIFICATION

(11) **EP 4 353 065 B1**
(45) Date of publication and mention of the grant of the patent: **29.04.2026**
(21) Application number: 24152266.3
(22) Date of filing: 08.04.2021
(51) Int. Cl.: A01B 49/02, A01B 61/04, A01B 63/22, A01C 7/20, A01B 49/06

(54) **CULTIVATOR FOR TILLAGE AND/OR FOR SPREADING OF SEEDS AND/OR FERTILISERS**
KULTIVATOR ZUR BODENBEARBEITUNG UND/ODER ZUM AUSBRINGEN VON SAMEN UND/ODER DÜNGEMITTELN
CULTIVATEUR DE TRAVAIL DU SOL ET/OU D'ÉTALEMENT DE GRAINES ET/OU D'ENGRAIS

(43) Date of publication of application: 17.04.2024
(62) Divisional of application: 21167532.7
(73) Proprietor: Czajkowski Maszyny Sp. z o.o., 87-400 Sokolowo (PL)
(72) Inventor: Czajkowski, Maciej, Sokolowo (PL)
(74) Representative: Wroblewski, Marcin Jan

(56) References cited:
- EP-A1- 3 732 942
- EP-B1- 1 670 303
- EP-B1- 2 982 231
- DE-A1- 19 620 015
- FR-A1- 3 012 721
- PL-Y1- 70 171
- US-A1- 2010 192 820
- US-B2- 8 903 545

## Description

### Technical field

The invention relates to a cultivator for tillage and/or for spreading of seeds and/or fertilisers, especially a strip-till cultivator.

### State of the art

WO2013036191A1 discloses an agricultural implement for soil cultivation comprising a main frame, a frame of a side section rotationally connected to the main frame, at least one transport wheel, at least one tilling implement, at least one ground-contacting depth limiter, linked to the frame of the side section, for controlling the working depth of said tilling implement, and an actuator for controlling the height position of said transport wheel relative to the main frame or for controlling the position of said depth limiter relative to the main frame. The depth limiter in the disclosed solution is connected to the transport wheel so that both the position of the depth limiter and the position of the transport wheel are simultaneously controlled by said actuator.

US8235130B2 discloses an agricultural implement comprising a central frame configured so as to carry a great number of working units that are used in agriculture. The agricultural implement also comprises a right and a left wheel units rotationally fixed to the central frame, a left-wheel actuator that connects the left wheel unit to the central frame configured so as to raise and lower the frame in order to adjust the depth of the working units, and a right-wheel actuator that connects the right wheel unit to the central frame configured so as to raise and lower the frame in order to adjust the depth of the working units. Furthermore, the agricultural implement comprises a depth control system that adjusts the flow of hydraulic fluid to and from the left- and right-wheel hydraulic actuators in order to maintain the depth of the implement-frame at a level selected by its operator.

DE19733210A1 discloses a combined tilling-and-sowing machine that comprises a sowing unit, a tilling unit, a precision seeder, and a seed tank mounted on a chassis, wherein the sowing unit can be raised hydraulically and the scarifying depth of the tilling unit can be adjusted by means of a control system without affecting the precision seeder.

EP2835043B1 discloses a towed agricultural combination cultivator for tilling soil and/or spreading of seeds and/or fertilizers, comprising a frame to which a parallelogram-shaped suspension is connected that can be raised and lowered, wherein the suspension consists of at least one upper connecting member, at least one lower connecting member, and a bearing frame that extends at right angles relative to the direction of travel of the combination cultivator. The combination cultivator also comprises at least one soil compacting roller connected to the bearing frame of the suspension, and at least one fixing means located behind the compacting roller in the direction of travel, which fixing means is connected to the bearing frame of the suspension, wherein the fixing means couples at least one sowing unit for spreading seeds and/or fertilizers on soil and/or one or more soil tillage implements to the bearing frame, wherein at least one upper connecting member and at least one lower connecting member are coupled to the cultivator's frame and bearing frame via joints whose rotation axes are oriented as much as possible at right angles to the direction of travel and parallel to each other, in such a way that lifting and lowering of the suspension is possible by means of at least one actuator, wherein the angular position of the bearing frame remains unchanged at least as much as possible. The agricultural combination cultivator gets switched to the transport position (TP) by the lowering movement of the suspension, wherein in the transport position (TP) the at least one compacting roller unit comes into contact with the ground surface and takes the form of tyres for the cultivator to drive on roads, wherein in the transport position (TP) the one or more sowing units and/or the one or more implements are lifted relative to the ground surface in such a way they are not in contact with the ground surface, wherein the one or more compaction units take the form of one or more rotating compaction tyres that are rigidly connected to the bearing frame, in contact with the ground surface for support movement of the combination cultivator.

From US2010192820A1 it is known an agricultural machine having an implement regulating device comprising at least one group of implements arranged across the driving direction, cross-wise arranged support members and at least one each group of implements and support members controllable and adjustable power device whereby implements and support members comprising each group are journalled in bearings at one end of at least one carrying arm and that said power device is adapted to rotate a cross-running main beam, whereby the main beam is connected with the carrying arm via a spring member and is rotatably suspended in relation to the frame of the machine, whereby activation of said power device is adapted to influence the carrying arm between a position for maximum sowing depth and a transport position.

From FR3012721A1 it is known a soil working machine comprising a frame which can be coupled to a tractor, at least one soil working unit suspended from the frame, a follower roller connected to said machine frame via a four-jointed guide as well as a working depth adjusting device designed to adjust the working depth of said soil working unit. The working depth adjusting device has a member for adjusting the working depth of the four-jointed guide. The follower roller is mounted so as to be adjustable in height relative to the four-jointed guide. Said adjustment is done by means of a lifting actuator in order to raise the soil working unit into a turning and/or transport position.

From PL70171Y1 it is known a strip-till device having a frame to which the work unit, tank unit and drawbar are attached. The frame is connected pivotally to a lifting arm. Further, there is a lifting actuator between the frame and the lifting arm, and the lifting arm is connected to the compacting and driving roller. Moreover, the frame is connected pivotally to the drawbar, and a drawbar actuator is attached to the frame and to the drawbar. In addition, the frame is connected to the compaction and drive roller by a stabilizer. The strip-till device is equipped at the rear with a three-point suspension system. The three-point suspension system is connected by a hydraulically folding frame and a rear actuator.

From US8903545B2 it is known an agricultural seeding implement comprising a mobile frame including a main section and a wing section hingedly attached to said main section. The main section having ground-engaging main section compaction wheels that support the weight of the main section and compact the ground under the main section as the frame is advanced. The wing section having ground-engageable wing section compaction wheels that support the weight of the wing section and compact the ground under the wing section when the wing section compaction wheels are on the ground and the frame is advanced. The agricultural seeding implement comprises main section seeding units on the main section and wing section seeding units on the wing section for depositing seeds in the ground as the frame is advanced as well as a seed hopper carried on the main section for dispensing seeds to both the main section seeding units and the wing section seeding units as the frame is advanced. The agricultural seeding implement comprises further a system coupled with the seed hopper for determining the weight of the hopper and performing a control function on the implement in response to determining the weight of the hopper. The system comprises a hydraulic operating circuit including a hydraulic wing cylinder operably coupled with the wing section for use in applying adjustable down-pressure against the wing section when the wing section compaction wheels are engaging the ground. The system further comprises an electrical control circuit operable to cause adjustment of the down-pressure against the wing section by the hydraulic wing cylinder as a function of changes in the weight of the seed hopper on the main section due to a changing supply of seeds in the seed hopper determined by the electrical control circuit, whereby to promote uniform soil compaction by the main section compaction wheels and the wing section compaction wheels across the width of the implement.

From EP2982231B1 it is known a seeder having a coulter arrangement with at least two sowing coulter rows lying one behind another in the direction of travel (F). The sowing coulters of each row are arranged on a common coulter bar which is rotatable in order to adjust the working depth (A) via links of differing length. The coulter bar can be adjusted in height in order to ensure a coulter pressure produced uniformly via the links of differing length during the rotation (R) of the coulter bar. The seeder has further a four-bar linkage for guiding the coulter bar along a curved path. The coulter bar is movable along the curved path in such a manner that the rotational and height position of the coulter bar jointly changes during the movement.

EP3732942A1 discloses an agricultural machine having a control system for agricultural working tools, such as seed coulters, cutting discs, rollers or the like, with at least two such working tools each being pivotably mounted by means of elastic bearing elements on a carrier. The carrier is pivotably mounted or attached to a bearing flange or a frame element of the agricultural machine by means of an actuator. The respective angular position of the carrier is adjusted in relation to an arable area by means of the actuator. Changing the angular position of the carrier changes the working depth of the working tools. The control system further is equipped with a measuring device assigned to at least one working tool and/or the carrier to measure the working depth. The actuator can be controlled on the basis of the working depth determined by the at least one measuring device and the working tools mounted on the carrier.

Document DE19620015A1 reveals an agricultural tillage combination, consisting of a carrier frame with a running gear having running wheels and a drawbar, at least one soil tillage implement arranged on the carrier frame by means of a parallelogram-like mounting with soil tillage tools fastened to the frame and a soil roller, wherein at least one pressure-generating device loading the soil roller in the direction of the soil is arranged between the frame and the soil tillage implement and/or the soil roller, characterised in that the pressure generating device is designed to be controllable, so that the load weight which can be transmitted to the soil roller and/or the soil tillage implement from the support frame can be varied, preferably by means of a remote control device which can be actuated from the tractor seat and/or by means of an electronic control device.

EP1670303B1 discloses a movable chassis system for moving planting lines in planters, fertilizers and agricultural machinery. The system comprising a first chassis holding tanks/reservoirs for containing products, at least a runner wheel, said first chassis being fixed and coupled directly to the wheel, a second chassis floating or movable attached to the first chassis so as to allow raising and lowering of the second chassis, distributor elements near the soil for distributing the products, the distributor elements being arranged on the second chassis and are attached on a separate structure from the tanks/reservoirs, planting lines arranged on the second chassis, the second chassis defining movement of the planting lines for transporting or planting, a yoke coupled to the first chassis, the first chassis being linked to the wheel and the yoke and a hydraulic cylinder associated to the first chassis. The system further comprises a larger extendable bar having a first end attached to the first chassis and a second end attached to the second chassis, the hydraulic cylinder having a shaft that is attached by a coupling point that is situated on the larger extensible bar and a a lesser extendible bar having a first end attached to the first chassis and a second end responsible for housing coupling point that attaches the first chassis to the second chassis, the larger and lesser extensible bars allowing functional independence between the first and second chassis, so that each does a specific task and does not interfere with the other.

In state-of-the-art solutions, there are significant loads on a bearing frame of a cultivator, which leads to a shortening of its service life and, consequently, to a higher failure rate of such cultivators. Also, the constructions of said cultivators do not comprise shock-absorbing systems, which causes limited stability and adaptability of said cultivators to the ground being tilled. Moreover, the lack of shock-absorbing systems translates into territorial limitations in the use of such cultivators due to the fact that they do not meet the technical requirements regulated by national laws, especially in the context of the braking efficiency of the travel systems of such machines.

The aim of the invention is to develop a construction of a cultivator for tillage and/or for spreading of seeds and/or fertilisers that would be more efficient than the existing solutions and would not have the above-mentioned disadvantages.

### Brief summary of the invention

The object of the invention is described by the subject-matter of independent claim 1. Particular embodiments of the invention are defined in the dependent claims.

The disclosed construction of the cultivator according to the invention ensures a more even load distribution on the bearing frame compared to state-of-the-art solutions because said loads are exerted on both the front frame and the rear frame.

Application of the shock-absorbing system for the transport-and-compaction wheel assemblies ensures improved stability and adaptability of the cultivator for tillage and/or for spreading of seeds and/or fertilisers to the ground that is being tilled. Improved stability of the cultivator reduces the number of vibrations transmitted to the cultivator, thus increasing the service life of its individual components and, consequently, the service life of the entire cultivator.

Also, application of said shock-absorbing system has a positive effect on how the cultivator follows the ground and on its transverse levelling, thus making it possible to maintain a constant depth of sowing regardless of the type of soil, even on uneven surfaces. Moreover, the shock-absorbing system improves the braking efficiency.

The system lifting and lowering preferably comprises at least one lifting support, at least one stabilizer, and at least one actuator coupled to the lifting support and to the main frame, the lifting support of the lifting and lowering system is rotationally connected to the main frame and to the front frame, the stabilizer of the lifting and lowering system is rotationally connected to the main frame and to the rear frame.

The lifting and lowering system may be configured in such a way that the angular position of the main frame changes relative to the soil surface while the bearing frame is being lifted/lowered.

Preferably, all the transport-and-compaction wheel assemblies are fitted with a shock-absorbing system. This significantly increases the braking efficiency since all the transport-and-compaction wheel assemblies are in contact with the ground.

Preferably, the shock-absorbing system of the transport-and-compaction wheel assembly comprises a suspension beam to which at least one wheel of the transport-and-compaction wheel assembly is connected, one end of which suspension beam is rotationally connected to the front frame and the other end of which is mounted, with an ability to move up and down, in the rear frame, and an actuator that is fixed to the rear frame and to the suspension beam. It is possible to apply a hydraulic actuator, a pneumatic actuator, or an electric actuator.

Preferably, the rear frame comprises a raceway, while the end of the suspension beam mounted in the rear frame is fitted with rollers adapted for moving along the raceway.

Equally preferably, the end of the suspension beam mounted in the rear frame is fitted with a slider and the rear frame comprises slider plates, wherein the slider is adapted for moving between the slider plates.

Application of the slider adapted for moving between the slider plates allows smooth movement of the suspension beam in the rear frame, which translates into shock-absorption of the transport-and-compaction wheel assembly.

Preferably, a frame for fixing at least one sowing attachment and/or at least one precision seeder is attached to the bearing frame by means of a suspension system, wherein the suspension system comprises at least one suspension system's lifting support rotationally fixed to the bearing frame and to the frame for fixing at least one sowing attachment and/or at least one precision seeder, at least one connecting member that is rotationally connected to the frame for fixing at least one sowing attachment and/or at least one precision seeder, which connecting member is coupled to the main frame by means of stabilizing arms, and at least one actuator coupled to the suspension system's lifting support and to the bearing frame, wherein the stabilizing arm is rotationally connected to the bearing frame.

Preferably, the cultivator comprises at least one stabilization wheel fixed to the suspension system's lifting support of the suspension system of the frame for fixing at least one sowing attachment and/or at least one precision seeder.

Preferably, the cultivator comprises a two-chamber tank with a changeable capacity of the chambers.

Preferably, the cultivator comprises at least one intermediate frame connected to the main frame, from which at least one working section is suspended that is a working component of the cultivator.

Preferably, the cultivator comprises lateral frames connected to the bearing frame, to which lateral compaction wheel assemblies are fixed.

Preferably, lateral compaction wheel assemblies are fitted with shock-absorbing systems, wherein each such shock-absorbing system comprises an assembly of rotationally connected plates, wherein one of the plates is rigidly fixed to the lateral frame and the lateral compaction wheel assembly is rigidly fixed to the other plate; furthermore, rigidly fixed in the bottom of the other plate there is at least one pin that freely passes through an opening in the first plate, and there is a spring on the pin between its free end and the plate.

Preferably, at the ends of the spring there are centring washers that centre the spring on the pin.

Application of the at least one transport-and-stabilization wheel ensures that load is taken off the frame for fixing at least one sowing attachment and/or at least one precision seeder, ensures an increase in the stability of the implements suspended from the frame for fixing at least one sowing attachment and/or at least one precision seeder, and ensures a decrease in loads on the bearing frame and on the transport-and-compaction wheel assemblies caused by the implements suspended from the frame for fixing at least one sowing attachment and/or at least one precision seeder. What is more, application of the at least one transport-and-stabilization wheel ensures improved weight distribution of the cultivator and, consequently, load of its axles on the ground.

### Advantages of the invention

The construction of the shock-absorbing system applied in the transport-and-compaction wheel assemblies of the cultivator according to the invention ensures improved stability and adaptability to the ground being tilled.

The construction of the shock-absorbing system applied in the transport-and-compaction wheel assemblies of the cultivator according to the invention ensures a reduced number of vibrations transmitted to the cultivator, thus increasing the service life of its individual components and, consequently, the service life of the entire cultivator.

The construction of the shock-absorbing system applied in the transport-and-compaction wheel assemblies of the cultivator according to the invention has a positive effect on how the cultivator follows the ground and on its transverse levelling, thus making it possible to maintain a constant depth of sowing regardless of the type of soil, even on uneven surfaces.

The construction of the shock-absorbing system applied in the transport-and-compaction wheel assemblies of the cultivator according to the invention ensures increased efficiency of the braking system.

The construction of the cultivator according to the invention ensures a more even load distribution on the bearing frame compared to state-of-the-art solutions.

The construction of the cultivator according to the invention ensures that its drawbar coupler remains in an unchanged position, at a constant height H, in both the transport position and the working position of the cultivator. This has an effect on improving the operator's working comfort by reducing the number of operations that must be performed by the operator on headland. For example, the operator does not have to change the position of the cultivator by means of the arms of the tractor's three-point suspension system.

What is more, application of the at least one transport-and-stabilization wheel ensures improved weight distribution of the cultivator and, consequently, load of its axles on the ground.

### Description of the drawing figures

Embodiments of the subject matter of the invention have been presented in the drawing, where:
- Fig. 1: presents the cultivator according to the invention in the first embodiment, in the transport position, viewed from the side;
- Fig. 2: presents the cultivator according to the invention in the first embodiment, in the working position, viewed from the side;
- Fig. 3: presents an enlarged side-view of the shock-absorbing system of the cultivator according to the invention;
- Fig. 4: presents the shock-absorbing system of the cultivator according to the invention in various working positions, viewed from the side;

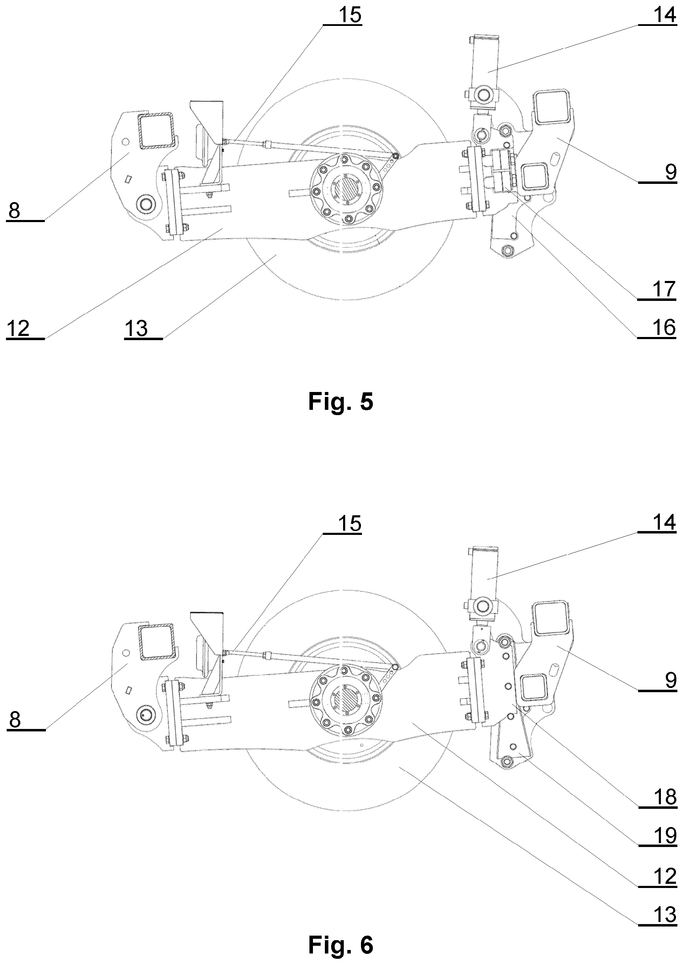

- Fig. 5: presents a view of the shock-absorbing system of the cultivator in the first embodiment;
- Fig. 6: presents a view of the shock-absorbing system of the cultivator in the second embodiment;
- Fig. 7: presents the cultivator according to the invention in the third embodiment, in the transport position, viewed from the side;
- Fig. 8: presents the cultivator according to the invention in the third embodiment, at the first stage of work, viewed from the side;
- Fig. 9: presents the cultivator according to the invention in the third embodiment, at the second stage of work, viewed from the side (working position);
- Fig. 10: presents the cultivator according to the invention in the third embodiment, at the third stage of work, viewed from the side;

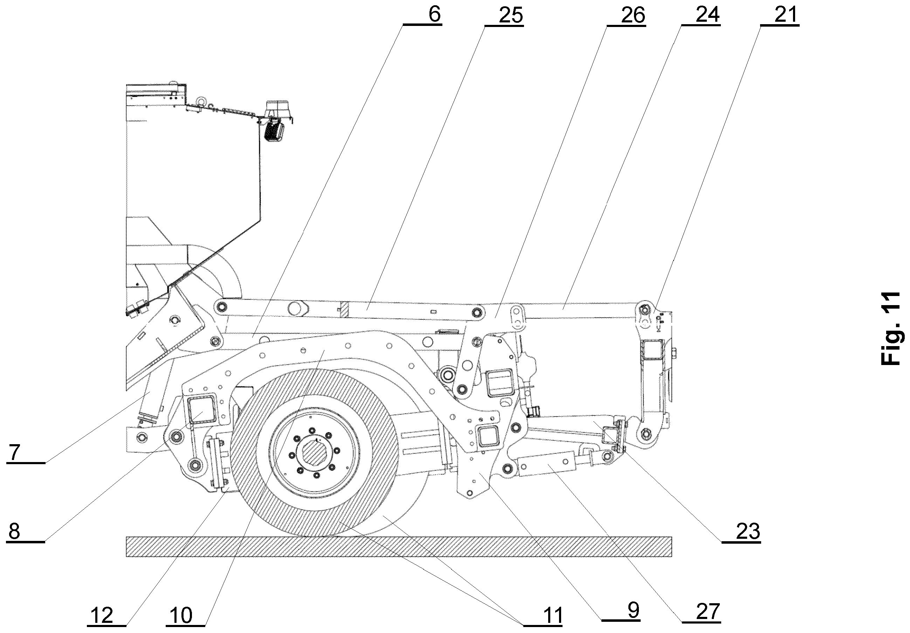

- Fig. 11: presents an enlarged side-view of the suspension system of the frame for fixing at least one sowing attachment and/or at least one precision seeder, in the third embodiment;

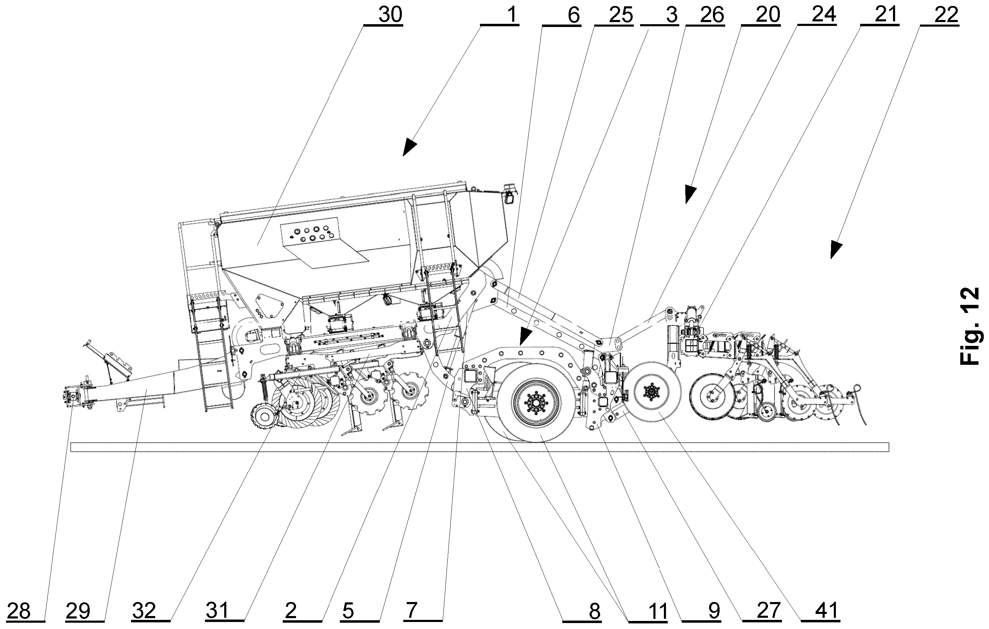

- Fig. 12: presents the cultivator according to the invention with installed transport-and-stabilization wheels, viewed from the side;

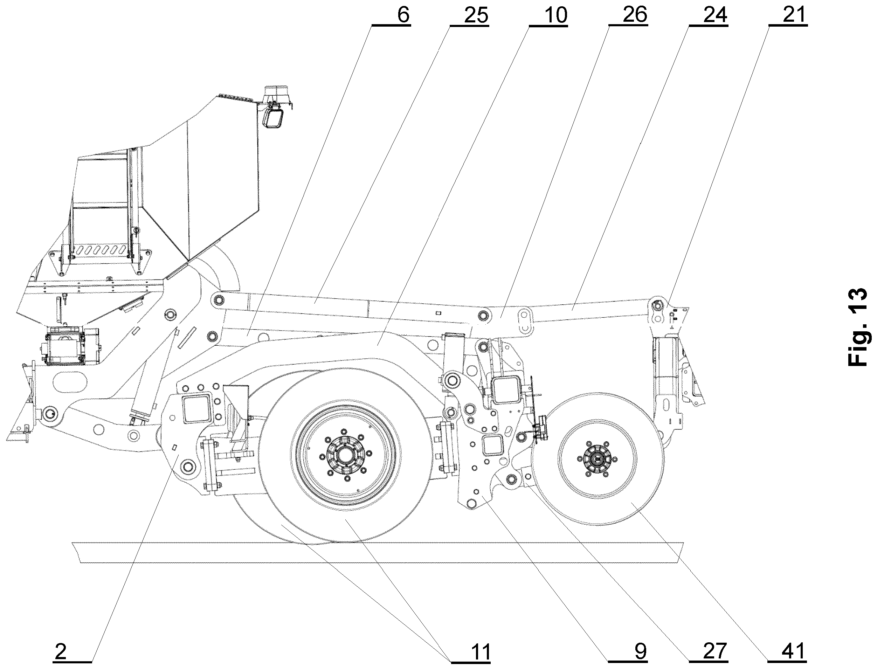

- Fig. 13: presents an enlarged side-view of the suspension system of the frame for fixing at least one sowing attachment and/or at least one precision seeder, in the third embodiment;

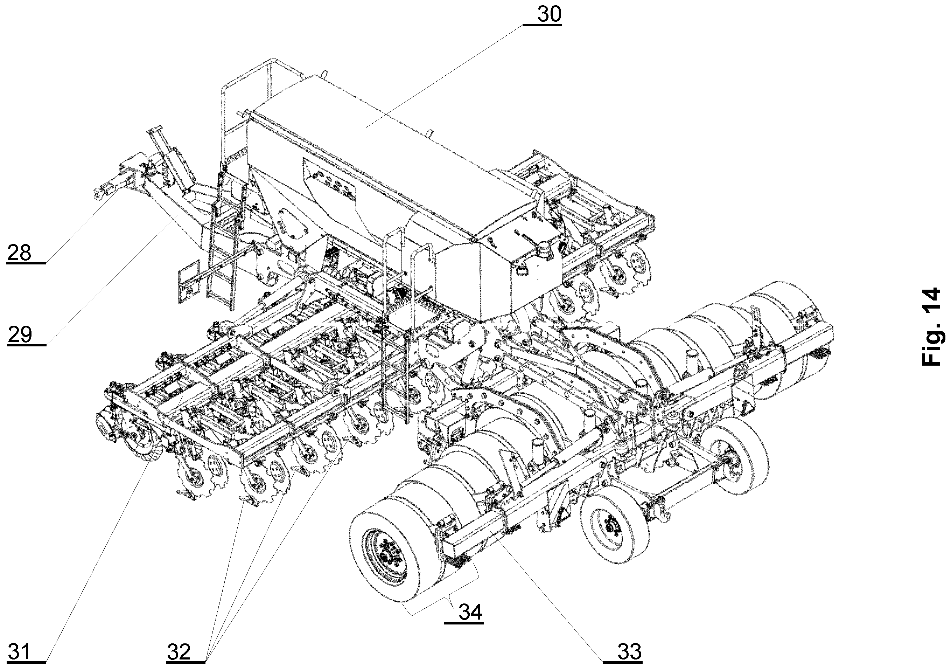

- Fig. 14: presents the cultivator according to the invention in the third embodiment, in an axonometric view;

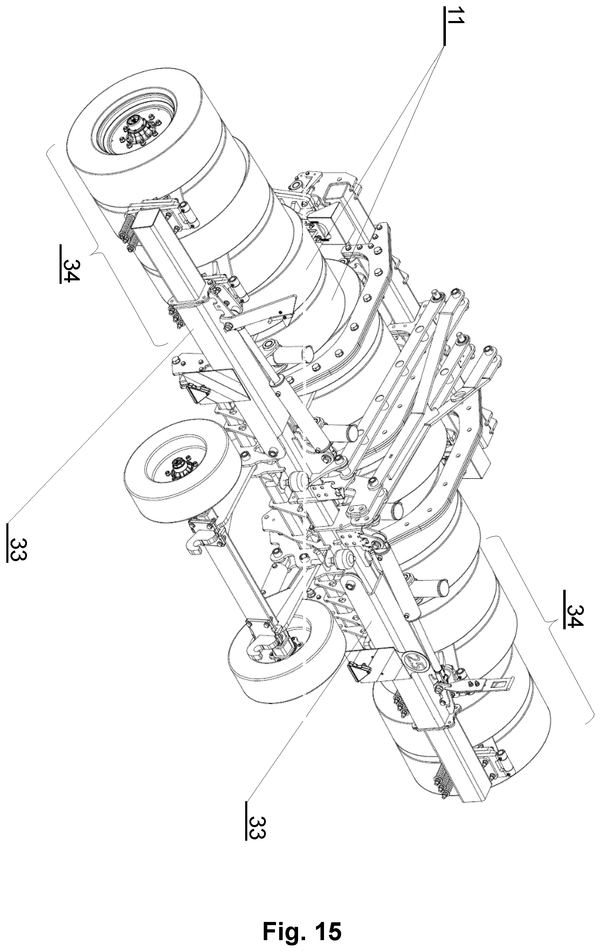

- Fig. 15: presents an enlarged view of the bearing frame of the cultivator according the invention with lateral compaction wheel assemblies with transport-and-stabilization wheels, in an axonometric view;

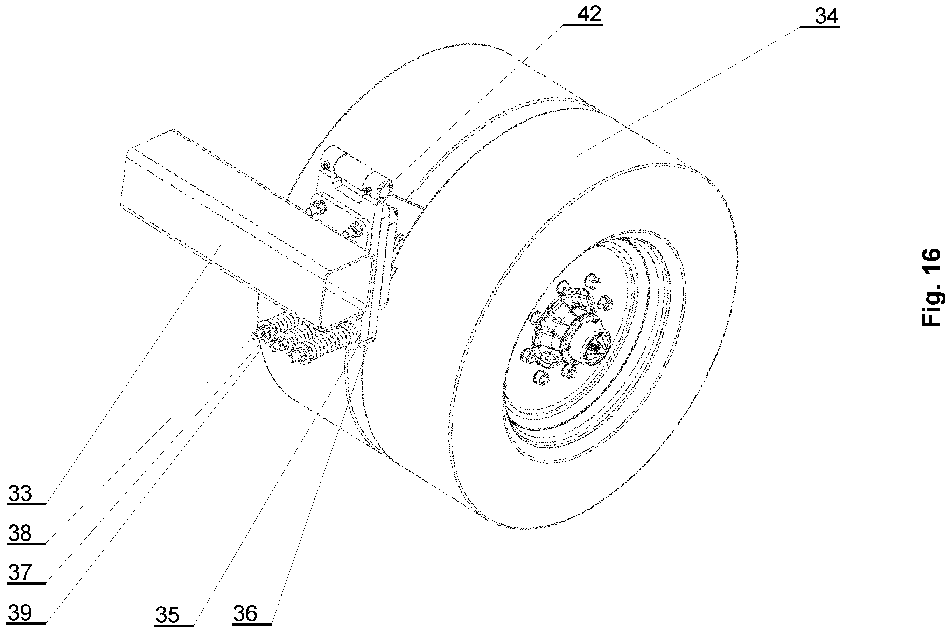

- Fig. 16: presents an enlarged view of the lateral frame with the lateral compaction wheel assembly of the cultivator according to the invention;
- Fig. 17: presents an enlarged view of the lateral frame with the lateral compaction wheel assembly at various stages of work of the shock-absorbing system of the lateral compaction wheel assemblies.

### Detailed description of the invention

### First embodiment of the invention

In the first embodiment, a cultivator for tillage and/or for spreading of seeds and/or fertilisers comprises a main frame 2 connected to a bearing frame 3 by means of a lifting and lowering system 4 adapted so as to lift/lower the bearing frame 3 relative to the main frame 2, wherein the bearing frame 3 comprises a front frame 8 rigidly connected to a rear frame 9 by means of connecting-and-distancing members 10.

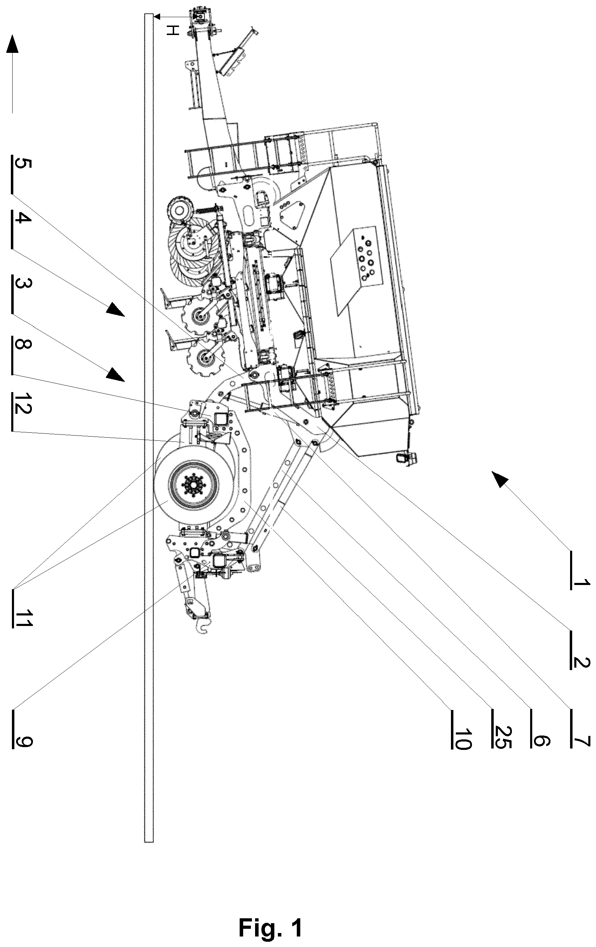

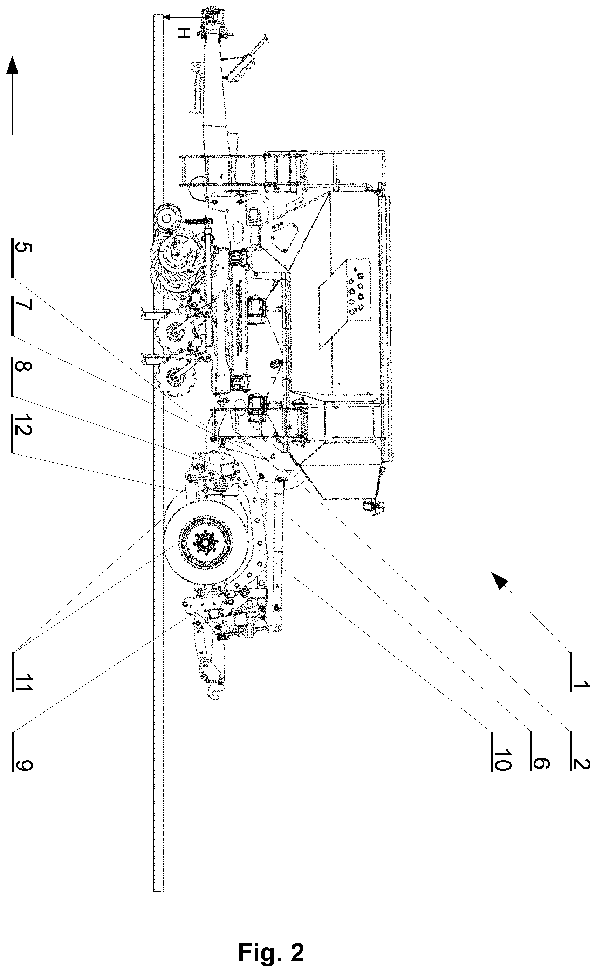

Said lifting and lowering system 4 comprises two lifting supports 5, two stabilizers 6, and two actuators 7 coupled to the lifting supports 5 and to the main frame 2. The lifting supports 5 of the lifting and lowering system 4 are rotationally connected to the main frame 2 and to the front frame 8, whereas the stabilizers 6 of the lifting and lowering system 4 are rotationally connected to the main frame 2 and to the rear frame 9. The lifting and lowering system 4 is configured in such a way that the angular position of the main frame 2 changes relative to the soil surface while the bearing frame 3 is being lifted/lowered. In the transport position of the cultivator 1 (Fig. 1), the transport-and-compaction wheel assemblies 11 are in contact with the ground, whereas the main frame 2 is in a lifted position at an angle to the bearing frame 3 and to the ground. The transition of the cultivator 1 from the transport position to the working position (Fig. 2) is carried out using the actuators 7. During the lowering movement, the angular position of the main frame 2 changes in relation to the bearing frame 3 and to the ground. What is more, said cultivator comprises transport-and-compaction wheel assemblies 11 fitted with braking systems 15, and shock-absorbing systems located between the front frame 8 and the rear frame 9. The shock-absorbing systems of the transport-and-compaction wheel assemblies 11 comprise a suspension beam 12 to which wheels 13 of the transport-and-compaction wheel assembly 11 are connected. One end of the suspension beam 12 is rotationally connected to the front frame 8, and the other end is mounted, with an ability to move up and down, in the rear frame 9. In this embodiment, the rear frame 9 comprises a raceway 16, while the end of the suspension beam 12 mounted in the rear frame 9 is fitted with rollers 17 adapted for moving along the raceway 16. This enables smooth movement of the suspension beam in the rear frame 7, which translates into shock-absorption of the transport-and-compaction wheel assembly 11.

The shock-absorbing system also comprises a hydraulic actuator 14 fixed to the rear frame 9 and to the suspension beam 12. In other embodiments, the actuator 14 may be a pneumatic actuator or an electric actuator. Depending on the selected position, the working actuator 14 influences the range of up and down movement of the suspension beam 12.

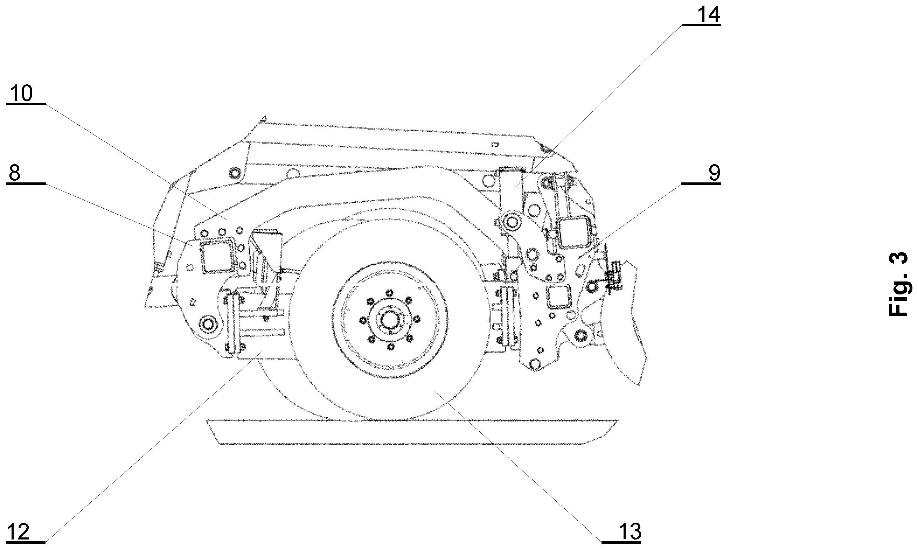

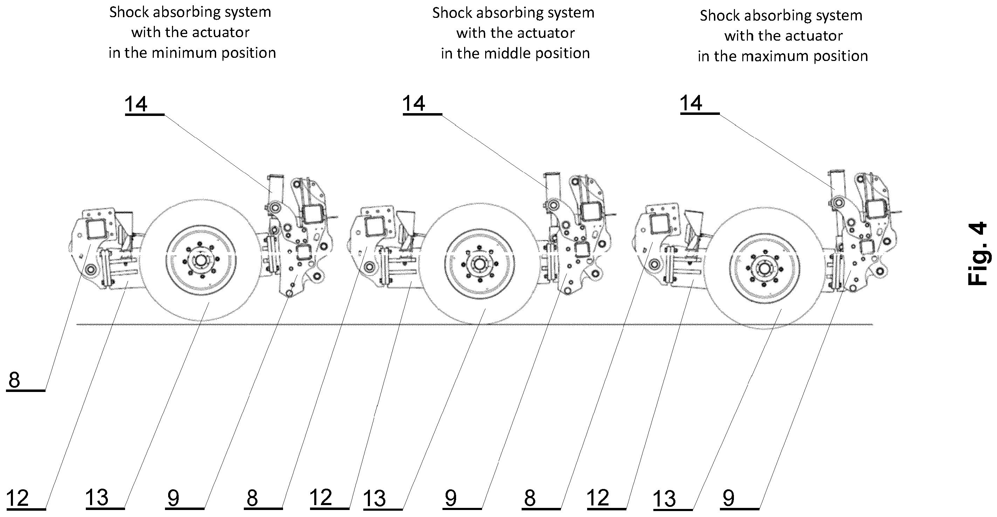

While the cultivator 1 is in the transport position, the working actuator 14 is originally in a position that allows up and down movement (Fig. 3, Fig. 4 - shock-absorbing system with the actuator in the middle position), and the flow of the medium to the accumulator of the hydraulic actuator 14 is opened. As a result, the transport-and-compaction wheel assemblies 11 have the ability to smoothly follow any bumps, as shown in Fig. 4. When the wheel 13 of the transport-and-compaction wheel assembly 11 hovers over the ground, the actuator 14 is lowered to the minimum position (the shock-absorbing system with the actuator in the minimum position), and when the wheel 13 settles in the ground, the actuator 14 is raised to the maximum position (the shock-absorbing system with the actuator in the maximum position).

The applied shock-absorbing system of the transport-and-compaction wheel assembly 11 ensures improved stability of the cultivator 1 and its adaptability to the ground by reducing the load of said transport-and-compaction wheel assembly 11 on the ground on which the cultivator 1 travels. Improved stability of the cultivator 1 reduces the number of vibrations transmitted to the cultivator 1, thus increasing the service life of its individual components and, consequently, the service life of the entire cultivator 1. Also, application of the shock-absorbing system has a positive effect on how the cultivator 1 follows the ground and on its transverse levelling, thus making it possible to maintain a constant depth of sowing regardless of the type of soil, even on uneven surfaces. In this embodiment, all the transport-and-compaction wheel assemblies 11 are fitted with a shock-absorbing system. What is more, all the transport-and-compaction wheel assemblies 11 are in contact with the ground, which significantly increases the braking efficiency.

The cultivator for tillage and/or for spreading of seeds and/or fertilisers 1 comprises a machine coupling that comprises a drawbar coupler 28 and a drawbar 29. Also, the cultivator 1 comprises a two-chamber tank 30 with a changeable capacity of the chambers. The construction of the cultivator 1 ensures that a constant height H of the drawbar coupler 29 is maintained.

### Second embodiment of the invention

A cultivator for tillage and/or for spreading of seeds and/or fertilisers 1 according to the first embodiment, but with the difference in that the end of the suspension beam 12 mounted in the rear frame 9 is fitted with a slider 18, while the rear frame 9 comprises slider plates 19. The slider 18 is adapted for moving between the slider plates 19. Preferably, the slider 18 is a non-lubricated slider and therefore constitutes a maintenance-free solution, which facilitates the work of the operator of the cultivator 1.

Application of the slider 18 adapted for moving between the slider plates 19 allows smooth movement of the suspension beam 12 in the rear frame 9, which translates into shock-absorption of the transport-and-compaction wheel assembly 11.

### Third embodiment of the invention

A cultivator for tillage and/or for spreading of seeds and/or fertilisers 1 according to the first or second embodiment, but with the difference in that a frame 21 for fixing at least one sowing attachment 22 and/or at least one precision seeder is attached to the bearing frame 3 by means of a suspension system 20.

The suspension system 20 comprises two suspension system's lifting supports 23 rotationally fixed to the bearing frame 3 and to the frame 21, and a connecting member 24 rotationally connected to the frame 21 and coupled to the main frame 2 via stabilizing arms 25 and 26. Furthermore, the suspension system 20 comprises a actuator 27 coupled to the suspension system's lifting support 23 and to the bearing frame 3, wherein the stabilizing arm 26 is rotationally connected to the bearing frame 3.

The cultivator 1 comprises further an intermediate frame 31 connected to the main frame 2, from which working sections 32 that constitute a working component of the cultivator are suspended.

Explanation of how a cultivator for tillage and/or for spreading of seeds and/or fertilisers with an attached sowing attachment works

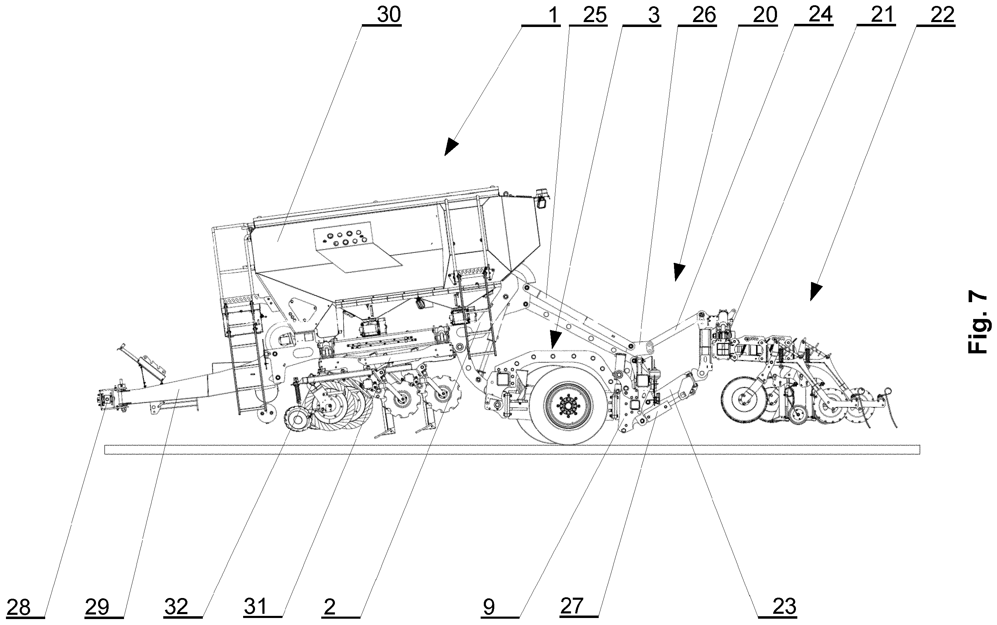

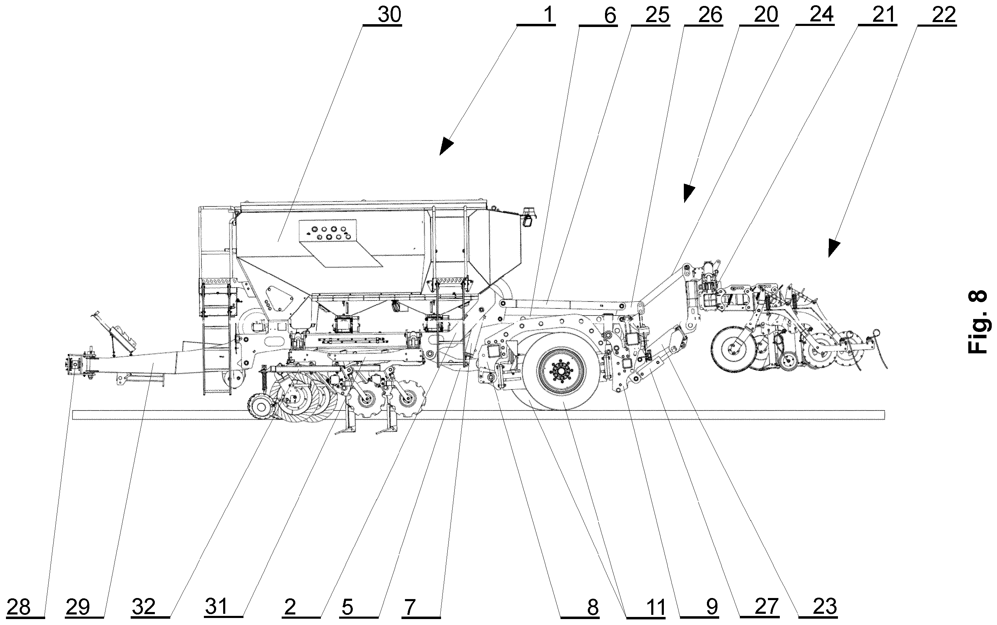

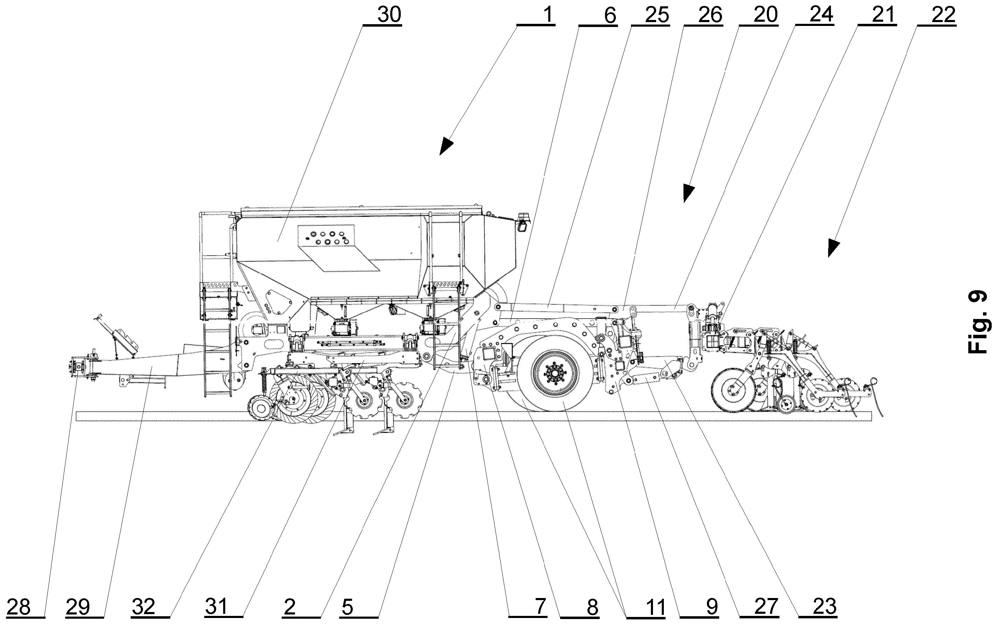

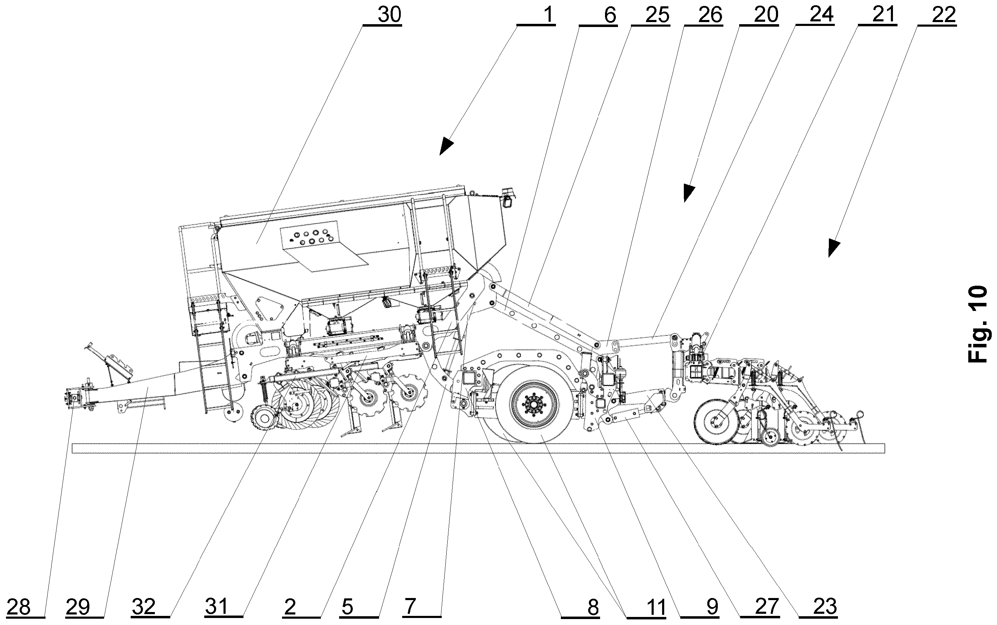

In the transport position of the cultivator 1 (Fig. 7), the transport-and-compaction wheel assemblies 11 are in contact with the ground, whereas the main frame 2 with the working sections 32 and the sowing attachment 22 are in a raised position relative to the bearing frame 3 and to the ground. This spatial arrangement of said elements allows the movement of the cultivator 1 at its various stages of work. The transition of the cultivator 1 from the transport position to the first stage of work in the working position (Fig. 8) is carried out using the actuators 7. During the lowering movement, the angular position of the main frame 2 changes in relation to the bearing frame 3 and to the ground. Both during the lowering and lifting of the cultivator 1, the position of the sowing attachment 22 in relation to the ground is variable to a small extent. This allows the sowing attachment 22 to work regardless of the position of the main frame 2 with the working sections 32 and of the position of the rear frame 9. During the first stage of work of the cultivator 1, the working sections 32 and the transport-and-compaction wheel assemblies 11 remain in contact with the ground, whereas the sowing attachment 22 is in a raised position relative to the bearing frame 3 and to the ground. This position of the working sections 32 makes it possible to spread fertilizer. During the second stage of work of the cultivator 1 (Fig. 9), the working sections 32, the transport-and-compaction wheel assemblies 11, and the sowing attachment 22 maintain contact with the ground, wherein the positions of the working sections 32 and of the sowing attachment 22 relative to the ground change independently of each other. In the last, third, stage of work of the cultivator 1 (Fig. 10), the transport-and-compaction wheel assemblies 11 and the sowing attachment 22 are in contact with the ground, whereas the working sections 32 are lifted relative to the ground. This position of the sowing attachment 22 makes it possible to sow seed. In both the transport position and the working position of the cultivator 1, the drawbar coupler 29 remains in an unchanged position, at a fixed height H. In other embodiments, other implements (e.g. a subsoiler for soil tillage) may be attached to the frame 21 instead of the sowing attachment 22.

### Fourth embodiment of the invention

A cultivator for tillage and/or for spreading of seeds and/or fertilisers 1 according to any of the preceding embodiments, but the difference in that it comprises transport-and-stabilization wheels 41 fixed to the suspension system's lifting supports 23. Application of the transport-and-stabilization wheels 41 ensures improved weight distribution of the cultivator and, consequently, load of its axles on the ground.

The transport-and-stabilization wheels 41 are used only for transporting the cultivator 1- during work they are not in contact with the ground. During transport, these wheels take load off the frame 21 for fixing a sowing attachment 22 and/or a precision seeder, and increase the stabilization of the implements suspended from the frame 21 for fixing a sowing attachment 22 and/or a precision seeder. Moreover, the transport-and-stabilization wheels 41 reduce the loads on the bearing frame 3 and on the wheel assemblies 11 caused by implements suspended from the frame 21.

### Fifth embodiment of the invention

A cultivator for tillage and/or for spreading of seeds and/or fertilisers 1 according to any of the preceding embodiments, but with the difference in that, it further comprises connected to the bearing frame 3 lateral frames 33 to which lateral compaction wheel assemblies 34 are fixed.

The lateral compacting wheel assemblies 34 are fitted with shock-absorbing systems comprising assemblies of rotationally connected plates 35, 36. The plate 35 is rigidly fixed to the lateral frame 33, and the lateral compaction wheel assembly 34 is rigidly fixed to the plate 36. Furthermore, rigidly fixed in the bottom of the plate 36 there is a pin 37 that freely passes through the opening in the plate 35. On the pin 37 there is a spring 39 between the pin's free end 38 and the plate 35, whereas at the ends of the spring 39 there are centring washers 40 that centre the spring 39 on the pin 37.

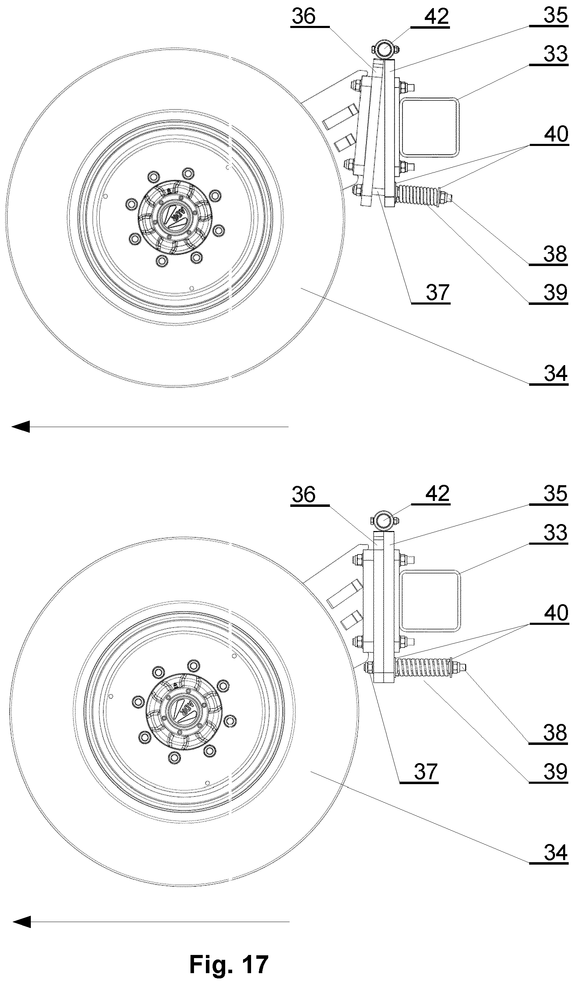

### Explanation of how the shock-absorbed lateral wheel assembly works (Fig. 17)

The lateral compaction wheel assemblies 34 fixed by means of the plates 35, 36 to the lateral frame 33 move in the direction of travel of the cultivator 1 (the arrow). After encountering an obstacle, the lateral compaction wheel assembly 34 circumvents it, forcing a rotational movement of the plate 36 relative to the plate 35 in the axis of rotation of a pivot 42. This movement causes a change in the position of the pin 37 and thus compresses the spring 39 between the centring washers 40. Once the obstacle has been circumvented, the expanding force of the spring 39 forces the lateral compaction wheel assembly 34 to return to its resting position.

### List of designations:

1 - cultivator for tillage and/or for spreading of seeds and/or fertilisers
2 - main frame
3 - bearing frame
4 - lifting and lowering system
5 - lifting supports
6 - stabilizers
7 - actuator
8 - front frame
9 - rear frame
10 - connecting-and-distancing members
11 - transport-and-compaction wheel assembly
12 - suspension beam
13 - wheel
14 - actuator
15 - braking system
16 - raceway
17 - rollers
18 - slider
19 - slider plates
20 - suspension system
21 - frame for fixing at least one sowing attachment and/or at least one precision seeder
22 - sowing attachment
23 - suspension system's lifting supports
24 - connecting member
25, 26 - stabilizing arms
27 - actuator
28 - drawbar coupler
29 - drawbar
30 - two-chamber tank
31 - intermediate frame
32 - working sections
33 - lateral frames
34 - lateral compaction wheel assemblies
35, 36 - plates
37 - pin
38 - free end of the pin
39 - spring
40 - centring washers
41 - transport-and-stabilization wheel
42 - pivot

## Claims

1. A cultivator for tillage and/or for spreading of seeds and/or fertilisers comprising:
- a main frame (2) connected to a bearing frame (3) by means of a lifting and lowering system (4) adapted so as to lift/lower the bearing frame (3) relative to the main frame (2),
- the bearing frame (3) comprises a front frame (8) rigidly connected to a rear frame (9) by means of connecting-and-distancing members (10),
- and that said cultivator comprises at least one transport-and-compaction wheel assembly (11) located between the front frame (8) and the rear frame (9),
**characterized in that** said transport-and-compaction wheel assembly (11) is provided with a shock-absorbing system.

2. The cultivator according to claim 1, the system (4) comprising at least one lifting support (5), at least one stabilizer (6), and at least one actuator (7) coupled to the lifting support (5) and to the main frame (2), the lifting support (5) of the lifting and lowering system (4) is rotationally connected to the main frame (2) and to the front frame (8), the stabilizer (6) of the lifting and lowering system (4) is rotationally connected to the main frame (2) and to the rear frame (9).

3. The cultivator according to claim 1 or 2, **characterized in that** the lifting and lowering system (4) is configured in such a way that the angular position of the main frame (2) changes relative to the soil surface while the bearing frame (3) is being lifted/lowered.

4. The cultivator according to any of the preceding claims, **characterized in that** all the transport-and-compaction wheel assemblies (11) are fitted with a shock-absorbing system.

5. The cultivator according to any of the preceding claims, **characterized in that** the shock-absorbing system of the transport-and-compaction wheel assembly (11) comprises:
- a suspension beam (12) to which at least one wheel (13) of the transport-and-compaction wheel assembly (11) is connected, one end of which suspension beam (12) is rotationally connected to the front frame (8) and the other end of which is mounted, with an ability to move up and down, in the rear frame (9), and
- an actuator (14) that is fixed to the rear frame (9) and to the suspension beam (12).

6. The cultivator according to claim 5, **characterized in that** the rear frame (9) has a raceway (16), while the end of the suspension beam (12) mounted in the rear frame (9) is fitted with rollers (17) adapted for moving along the raceway (16).

7. The cultivator according to claim 5, **characterized in that** the end of the suspension beam (12) mounted in the rear frame (9) is fitted with a slider (18) and the rear frame (9) comprises slider plates (19), wherein the slider (18) is adapted for moving between the slider plates (19).

8. The cultivator according to any of the preceding claims, **characterized in that**
- a frame (21) for fixing at least one sowing attachment (22) and/or at least one precision seeder is attached to the bearing frame (3) by means of a suspension system (20),
- wherein the suspension system (20) comprises:
- at least one suspension system's lifting support (23) rotationally fixed to the bearing frame (3) and to the frame (21),
- at least one connecting member (24) that is rotationally connected to the frame (21) and coupled to the main frame (2) by means of stabilizing arms (25) and (26), and
- at least one actuator (27) coupled to the suspension system's lifting support (23) and to the bearing frame (3),
- wherein the stabilizing arm (26) is rotationally connected to the bearing frame (3).

9. The cultivator according to any of the claims from 8, **characterized in that** it comprises at least one transport-and-stabilization wheel (41) fixed to the suspension system's lifting support (23).

10. The cultivator according to any of the preceding claims, **characterized in that** it comprises a two-chamber tank (30) with a changeable capacity of the chambers.

11. The cultivator according to any of the preceding claims, **characterized in that** it comprises at least one intermediate frame (31) connected to the main frame (2), from which at least one working section (32) is suspended that is a working component of the cultivator.

12. The cultivator according to any of the preceding claims, **characterized in that** it comprises lateral frames (33) connected to the bearing frame (3), to which lateral compaction wheel assemblies (34) are fixed.

13. The cultivator according to any of the preceding claims, **characterized in that** lateral compaction wheel assemblies (34) are fitted with shock-absorbing systems, wherein each such shock-absorbing system comprises an assembly of rotationally connected plates (35, 36), wherein the plate (35) is rigidly fixed to the lateral frame (33) and the lateral compaction wheel assembly (34) is rigidly fixed to the plate (36); furthermore, rigidly fixed in the bottom of the plate (36) there is at least one pin (37) that freely passes through an opening in the plate (35), and there is a spring (39) on the pin (37) between its free end (38) and the plate (35).

14. The cultivator according to claim 13, **characterized in that** at the ends of the spring (39) there are centring washers (40) that centre the spring (39) on the pin (37).

## Patentansprüche

1. Ein Kultivator zur Bodenbearbeitung und/oder zum Ausbringen von Saatgut und/oder Düngemitteln, umfassend:
- einen Hauptrahmen (2), der mittels eines Hebe- und Senksystems (4) mit einem Tragrahmen (3) verbunden ist, wobei das Hebe- und Senksystem (4) dazu eingerichtet ist, den Tragrahmen (3) relativ zum Hauptrahmen (2) anzuheben und abzusenken,
- der Tragrahmen (3) umfasst einen Vorderrahmen (8) aufweist, der mittels Verbindungs- und Distanzierungselementen (10) starr mit einem Hinterrahmen (9) verbunden ist,
- und dass der genannte Kultivator umfasst, mindestens eine Transport- und Verdichtungsradbaugruppe (11) mit der zwischen dem Vorderrahmen (8) und dem Hinterrahmen (9) angeordnet,
**dadurch gekennzeichnet, dass** der genannte Transport- und Verdichtungsradbaugruppe (11) mit einem schwingungsdämpfenden System aufweist.

2. Der Kultivator nach Patentanspruch 1, wobei das System (4) umfasst mindestens eine Hebestütze (5), mindestens einen Stabilisator (6) und mindestens einen Aktuator (7) mit der Hebestütze (5) und mit dem Hauptrahmen (2) gekoppelt ist, wobei die Hebestütze (5) des Hebe- und Senksystems (4) drehbar mit dem Hauptrahmen (2) und mit dem Vorderrahmen (8) verbunden ist und der Stabilisator (6) des Hebe- und Senksystems (4) drehbar mit dem Hauptrahmen (2) und mit dem Hinterrahmen (9) verbunden ist.

3. Der Kultivator nach Patentanspruch 1 oder 2, **dadurch gekennzeichnet, dass** das Hebe- und Senksystem (4) derart ausgelegt ist, dass sich die Winkelstellung des Hauptrahmens (2) relativ zur Bodenoberfläche während des Anhebens bzw. Absenkens des Tragrahmens (3) verändert.

4. Der Kultivator nach einem der vorhergehenden Ansprüche, **dadurch gekennzeichnet, dass** alle Transport- und Verdichtungsradbaugruppen (11) mit einem schwingungsdämpfenden System ausgestattet sind.

5. Der Kultivator nach einem der vorhergehenden Patentansprüche, **dadurch gekennzeichnet, dass** das schwingungsdämpfende System der Transport- und Verdichtungsradbaugruppe (11) umfasst:
- einen Federbalken (12), mit dem mindestens ein Rad (13) der Transport- und Verdichtungsradbaugruppe (11) verbunden ist, wobei ein Ende des Federbalkens (12) drehbar mit dem Vorderrahmen (8) verbunden ist und dessen anderes Ende im Hinterrahmen (9) mit einer Auf- und Abbeweglichkeit gelagert ist, und
- einen Aktuator (14), der am Hinterrahmen (9) und am Federbalken (12) befestigt ist.

6. Der Kultivator nach Patentanspruch 5, **dadurch gekennzeichnet, dass** der Hinterrahmen (9) eine Laufbahn (16) aufweist, während das im Hinterrahmen (9) gelagerte Ende des Federbalkens (12) mit Rollen (17) versehen ist, die zur Bewegung entlang der Laufbahn (16) ausgebildet sind.

7. Der Kultivator nach Patentanspruch 5, **dadurch gekennzeichnet, dass** das im Hinterrahmen (9) gelagerte Ende des Federbalkens (12) mit einem Gleiter (18) versehen ist und der Hinterrahmen (9) Gleitplatten (19) aufweist, wobei der Gleiter (18) zur Bewegung zwischen den Gleitplatten (19) ausgebildet ist.

8. Der Kultivator nach einem der vorhergehenden Patentansprüche, **dadurch gekennzeichnet, dass**
- ein Rahmen (21) zur Befestigung von mindestens einer Sägeräteanbaus (22) und/oder mindestens einer Einzelkornsämaschine mittels eines Aufhängungssystems (20) am Tragrahmen (3) befestigt ist,
- wobei das Aufhängungssystem (20) umfasst:
- mindestens eine Hebestütze (23) des Aufhängungssystems, die drehbar mit dem Tragrahmen (3) und mit dem Rahmen (21) verbunden ist,
- mindestens ein Verbindungselement (24), das drehbar mit dem Rahmen (21) verbunden und mittels Stabilisierungsarmen (25) und (26) mit dem Hauptrahmen (2) gekoppelt ist, sowie
- mindestens einen Aktuator (27), das mit der Hebestütze (23) des Aufhängungssystems und mit dem Tragrahmen (3) gekoppelt ist,
- wobei der Stabilisierungsarm (26) drehbar mit dem Tragrahmen (3) verbunden ist.

9. Der Kultivator nach einem der Patentansprüche ab 8, **dadurch gekennzeichnet, dass** er umfasst mindestens ein Transport- und Stabilisierungsrad (41), das an der Hebestütze (23) des Aufhängungssystems befestigt ist.

10. Der Kultivator nach einem der vorhergehenden Patentansprüche, **dadurch gekennzeichnet, dass** er einen Zweikammertank (30) mit veränderbarem Fassungsvermögen der Kammern umfasst.

11. Der Kultivator nach einem der vorhergehenden Patentansprüche, **dadurch gekennzeichnet, dass** er umfasst mindestens einen Hauptrahmen (2) zum Zwischenrahmen (31) verbunden, an dem mindestens eine Arbeitseinheit (32) aufgehängt ist, die eine Arbeitseinheit des Kultivators darstellt.

12. Der Kultivator nach einem der vorhergehenden Patentansprüche, **dadurch gekennzeichnet, dass** er umfasst seitliche Rahmen (33) zum Tragrahmen (3) verbunden und an denen seitliche Verdichtungsradbaugruppen (34) befestigt sind.

13. Der Kultivator nach einem der vorhergehenden Patentansprüche, **dadurch gekennzeichnet, dass** die seitlichen Verdichtungsradbaugruppen (34) mit schwingungsdämpfenden Systemen ausgestattet sind, wobei jedes solche schwingungsdämpfende System eine Anordnung drehbar verbundener Platten (35, 36) umfasst, wobei die Platte (35) starr am seitlichen Rahmen (33) befestigt ist und die seitliche Verdichtungsradbaugruppe (34) starr an der Platte (36) befestigt ist; ferner ist am Boden der Platte (36) mindestens ein Stift (37) starr befestigt, der frei durch eine Öffnung in der Platte (35) geführt ist, und auf dem Stift (37) befindet sich eine Feder (39) zwischen seinem freien Ende (38) und der Platte (35).

14. Der Kultivator nach Patentanspruch 13, **dadurch gekennzeichnet, dass** sich an den Enden der Feder (39) Zentrierbeilagen (40) befinden, die die Feder (39) auf dem Stift (37) zentrieren.

## Revendications

1. Un cultivateur pour le travail du sol et/ou pour l'épandage de semences et/ou d'engrais comprend:
- un châssis principal (2) relié à un châssis porteur (3) par un système de levage et d'abaissement (4) adapté pour lever/abaisser le châssis porteur (3) par rapport au châssis principal (2),
- le châssis porteur (3) comprend un châssis avant (8) relié rigidement un châssis arrière (9) par des éléments de liaison et de distanciation (10),
- ledit cultivateur comprend au moins un ensemble de roues de transport et de compactage (11) situé entre le châssis avant (8) et le châssis arrière (9)
**caractérisé en ce que** et que ledit cultivateur comprend au moins un ensemble de roues de transport et de compactage (11) avec un système d'amortisseur.

2. Le cultivateur selon la revendication 1, le système (4) comprend au moins un support de levage (5), au moins un stabilisateur (6), et au moins un actionneur (7) couplé au support de levage (5) et au châssis principal (2), le support de levage (5) du système de levage et d'abaissement (4) est relié en rotation au châssis principal (2) et au châssis avant (8), le stabilisateur (6) du système de levage et d'abaissement (4) est relié en rotation au châssis principal (2) et au châssis arrière (9).

3. Le cultivateur selon la revendication 1 ou 2, **caractérisé en ce que** le système de levage et d'abaissement (4) est configuré de sorte que la position angulaire du châssis principal (2) change par rapport à la surface du sol pendant que le châssis porteur (3) est levé/abaissé.

4. Le cultivateur selon l'une quelconque des revendications précédentes, **caractérisé en ce que** tous les ensembles de roues de transport et de compactage (11) sont équipés d'un système d'amortisseur.

5. Le cultivateur selon l'une quelconque des revendications précédentes, **caractérisé en ce que** le système d'amortisseur de l'ensemble roue de transport et de compactage (11) comprend:
- une poutre de suspension (12) à laquelle est reliée au moins une roue (13) de l'ensemble de roues de transport et de compactage (11), une extrémité de cette poutre de suspension (12) étant reliée en rotation au châssis avant (8) et l'autre extrémité étant montée, avec une capacité de déplacement vers le haut et vers le bas, dans le châssis arrière (9), et
- un actionneur (14) fixé au châssis arrière (9) et à la poutre de suspension (12).

6. Le cultivateur selon la revendication 5, **caractérisé en ce que** le châssis arrière (9) comporte un chemin de roulement (16), tandis que l'extrémité de la poutre de suspension (12) montée dans le châssis arrière (9) est équipée de rouleaux (17) adaptés pour se déplacer le long du chemin de roulement (16).

7. Le cultivateur selon la revendication 5, **caractérisé en ce que** l'extrémité de la poutre de suspension (12) montée dans le châssis arrière (9) est équipée d'un coulisseau (18) et que le châssis arrière (9) comprend des plaques coulissantes (19), dans lesquelles le coulisseau (18) est adapté pour se déplacer entre les plaques coulissantes (19).

8. Le cultivateur selon l'une quelconque des revendications précédentes, **caractérisé en ce que**
- un châssis (21) pour la fixation d'au moins un élément semeur (22) et/ou d'au moins un semoir de précision est fixé au châssis porteur (3) par un système de suspension (20),
- dans lequel le système de suspension (20) comprend:
- au moins un support de levage du système de suspension (23) fixé en rotation au châssis porteur (3) et au châssis (21),
- au moins un élément de liaison (24) relié en rotation au châssis (21) et couplé au châssis principal (2) par des bras stabilisateurs (25) et (26), et
- au moins un actionneur (27) couplé au support de levage du système de suspension (23) et au châssis porteur (3),
- dans lequel le bras stabilisateur (26) est relié en rotation au châssis porteur (3).

9. Le cultivateur selon l'une quelconque des revendications à partir de 8, **caractérisé en ce qu'**il comprend au moins une roue de transport et de stabilisation (41) fixée au support de levage du système de suspension (23).

10. Le cultivateur selon l'une quelconque des revendications précédentes, **caractérisé en ce qu'**il comprend un réservoir à deux compartiments (30) dont la capacité des compartiments est modifiable.

11. Le cultivateur selon l'une quelconque des revendications précédentes, **caractérisé en ce qu'**il comprend au moins un châssis intermédiaire (31) relié au châssis principal (2), auquel est suspendue au moins une section de travail (32) qui est un élément de travail du cultivateur.

12. Le cultivateur selon l'une quelconque des revendications précédentes, **caractérisé en ce qu'**il comprend des châssis latéraux (33) reliés au châssis porteur (3), sur lesquels sont fixés des ensembles de roues de compactage latérales (34).

13. Le cultivateur selon l'une quelconque des revendications précédentes, **caractérisé en ce que** les ensembles de roues de compactage latérales (34) sont équipés de systèmes d'amortisseur, dans lesquels chacun de ces systèmes d'amortisseur comprend un ensemble de plaques reliées en rotation (35, 36), dans lesquelles la plaque (35) est rigidement fixée au châssis latéral (33) et l'ensemble de roues de compactage latérales (34) est rigidement fixé à la plaque (36) ; en outre, au moins une goupille (37) fixée rigidement au fond de la plaque (36) passe librement à travers une ouverture de la plaque (35), et un ressort (39) se trouve sur la goupille (37) entre son extrémité libre (38) et la plaque (35).

14. Le cultivateur selon la revendication 13, **caractérisé en ce qu'**aux extrémités du ressort (39) se trouvent des rondelles de centrage (40) qui centrent le ressort (39) sur la goupille (37).
